# EUROPEAN PATENT SPECIFICATION

(11) **EP 1 472 852 B1**
(45) Date of publication and mention of the grant of the patent: **09.04.2008**
(21) Application number: 03714713.9
(22) Date of filing: 23.01.2003
(51) Int. Cl.: H04M 1/02, E05B 47/00, E05C 19/02, E05C 19/06, H05K 5/00

(54) **PIN LOCK FOR MOBILE PHONE HOUSING**
BOLZENVERRIEGELUNG FÜR EIN MOBILTELEFONGEHÄUSE
DISPOSITIF DE BLOCAGE DE CHEVILLE POUR BOITIER DE TELEPHONE MOBILE

(30) Priority: 07.02.2002 US 355308 P; 07.02.2002 US 354986 P; 10.07.2002 US 192962
(43) Date of publication of application: 03.11.2004
(73) Proprietor: Sony Ericsson Mobile Communications AB, 221 88 Lund (SE)
(72) Inventor: ANDERSSON, Magnus, S-222 41 Lund (SE); TRULSSON, Christian, S-211 46 Malmö (SE)
(74) Representative: Akerman, Marten Lennart
(86) International application number: PCT/EP2003/000628
(87) International publication number: WO 2003/067856

(56) References cited:
- EP-A- 1 074 685
- DE-A- 3 346 503
- DE-A- 3 542 325
- US-A- 3 638 285
- US-A- 5 982 881

## Description

### TECHNICAL FIELD

The present invention relates to a mobile phone pin interlocking mechanism that is adapted to release upon application of a magnet thereon.

### BACKGROUND OF THE INVENTION

A mobile phone typically has a housing surrounding electronic components, including a battery and other electronic components therein. In some mobile phone applications, the battery may be externally coupled to the mobile phone housing. The housing, which is typically made of a plastic or thermoplastic material, may consist of multiple components that are typically coupled together using screws, which are threaded, or snaps. In mobile phone applications where the battery is externally located from the mobile phone housing, a battery lock is provided at one end of the battery to couple the battery to the mobile phone housing. To open the mobile phone housing, threaded screws may be removed by a screwdriver and the like.

Because prior art fastening mechanisms, such as those used in the mobile phone industry, are typically small relative to the housing which is being fastened, the fasteners tend to come loose. The threads in the housing are also prone to wear, and typically fail to function after several uses. Those housings which may be snap-fitted together are typically designed for permanent fastening. Accordingly, when these snap-fits are released through the use of specially designed tools, the phone housing will not be in condition for re-assembly. The special tools utilized also are known to damage the housing of the mobile phone, thus making the separation of the housing components costly and undesirable.

U.S. Patent No. 5,982,881 discloses a mechanism for securing a telephone faceplate to a housing that utilizes snap-fits, along with a sliding latch keeper that engages a latch pin. The latch pin is fixed to the faceplate of the phone and secures the faceplate to the housing by engaging with the sliding latch keeper, which is attached to the housing. The latch pin fits through an aperture in the latch keeper. The latch keeper is then slid, using a pen, pencil or other instrument, such that the pin cannot retreat back through the aperture.

### SUMMARY OF THE INVENTION

To solve these problems and other problems of the prior art, a fastening mechanism for mobile phones is provided. The fastening mechanism may include a pin having a substantially-cylindrical shaped head. A shank is coupled to the substantially-cylindrical shaped end at a first end of the shank. A locking portion is provided on the shank proximal to a second end of the shank.

A pin-engaging mechanism and a base are provided to engage the locking portion of the shank and secure the fastening mechanism in a fixed relationship. A resilient member, such as a spring, may be provided coupled to the base to allow some flexibility in the interlocking relationship between the pin and the pin-engaging mechanism. The resilient member is preferably constructed of a metallic material adapted to be influenced by a magnet externally applied thereto.

Accordingly, two mobile phone housing components may be coupled together through the use of the pin and the pin-engaging mechanism. The pin may fit through a pre-designed orifice in a first housing component and couple with the pin-engaging mechanism, which is coupled to the second housing component, and fixedly secure the first and second housing components.

To disconnect the housing components, a magnet may be applied to the base to pull the base away from the pin. The force provided by the magnet may tilt the base and the pin-engaging mechanism away from the pin, and thereby disconnect the pin-engaging mechanism from the pin.

The pin may be hidden inside one of the housing components, thereby removing the interconnecting components from visibility by a user of the product. However, should aesthetics require visibility of the pin, the pin may be coupled to an external surface of the first housing prior to coupling with the second housing.

### BRIEF DESCRIPTION OF THE DRAWINGS

A more complete understanding of the method and apparatus of the present invention may be obtained by reference to the following Detailed Description when taken in conjunction with the accompanying Drawings wherein:
FIGURE 1 is an exploded view of one embodiment of the pin lock mechanism according to the principles of the present invention;
FIGURE 2 is an exploded view of a second embodiment of the pin lock mechanism according to the principles of the present invention;
FIGURE 3 is an isometric view of a pin-engaging mechanism housing according to one embodiment of the present invention;
FIGURE 4A is a top plan view of a pin-engaging mechanism and base according to one embodiment of the present invention;
FIGURE 4B is a side plan view of the pin-engaging mechanism and base of FIGURE 4A coupled to a resilient member;
FIGURE 4C is a top plan view of a pin-engaging mechanism and base according to an alternate embodiment of the present invention;
FIGURE 5 is a side plan view of the pin according to one embodiment of the present invention;
FIGURE 6 is an alternate embodiment of the resilient member shown in FIGURE 4A;
FIGURE 7 is a side plan view of the pin-engaging mechanism coupled to a pin and a resilient member as located in an exemplary pin-engaging mechanism housing; and
FIGURE 8 is a side plan view of the pin-engaging mechanism in a fixed position relative to an external member during decoupling of the pin from the pin-engaging mechanism.

### DETAILED DESCRIPTION

The present invention provides an economical, convenient coupling mechanism adapted to secure housing components of mobile phones. Two housing components of a mobile phone may be conveniently coupled through the use of the pin, pin-engaging mechanism and base. Decoupling the housing components may be accomplished through the application of an external magnet in the general vicinity of the base to separate the pin-engaging mechanism from the pin. The coupling and decoupling may occur many times without wear on the components. The coupling mechanism may be internally located to limit visibility thereof.

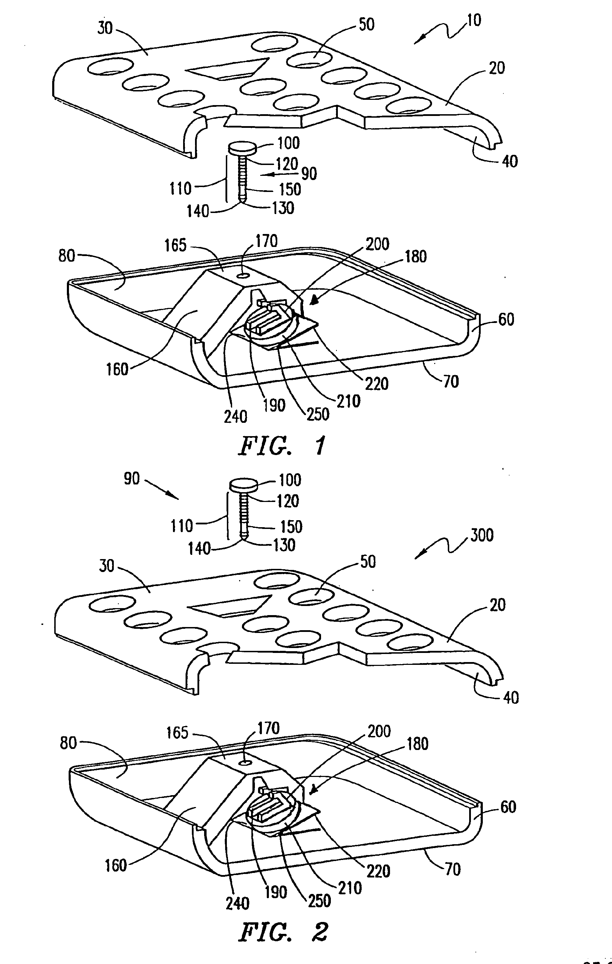

Referring now to the drawings, and more particular to FIGURE 1, an exploded view of a mobile phone housing assembly 10 is shown. The mobile phone housing assembly 10 includes a first housing portion 20 having an external surface 30 and an internal surface 40. The first housing portion 20 may be provided with a plurality of orifices 50 for indicia, phone number locations, display locations, and the like. A second housing portion 60 adapted to mate with the first housing portion 20 is also provided. The second housing portion 60 includes an external surface 70 and an internal surface 80.

A pin 90 couples the first housing portion 20 to the second housing portion 60. The pin 90 may include a head 100, which in certain embodiments may be substantially-cylindrical. A shank 110 having a first end 120 and a second end 130 is coupled to the head 100 at the first end 120. In certain embodiments discussed in more detail below, the second end 130 may be provided with tapers 140. Proximal to the second end 130, a locking portion 150 is provided on the shank 110. In this embodiment, the head 100 is adapted to fixedly secure to the first housing portion 20 and is not visible from the external surface 30 of the first housing portion 20.

Still referring to FIGURE 1, a pin-lock housing 160 is provided on the internal surface 80 of the second housing portion 60. The pin-lock housing 160 includes a top surface 165 having a pin-orifice 170 thereon adapted to receive the pin 90 therethrough. Secured within the pin-lock housing 160 is a pin lock 180. The pin lock 180 includes a pin-engaging mechanism 190, which in certain embodiments may be a pair of substantially vertically disposed legs 200, and a metallic base portion 210. A resilient member may be provided coupled to the base portion 210. As shown in FIGURE 1, the resilient member 220 is an angle 230 having a first end 240 in a first plane and a second end 250 coupled to the second housing portion 60 in a second plane.

Referring now to FIGURE 2, a mobile phone housing assembly 300 is shown in a second embodiment. The main difference between the mobile phone housing assembly 300 and the mobile phone housing assembly 10 is that the pin 90 is coupled through the first housing portion 20 on the external surface 30, thus making the pin 90 visible to a user.

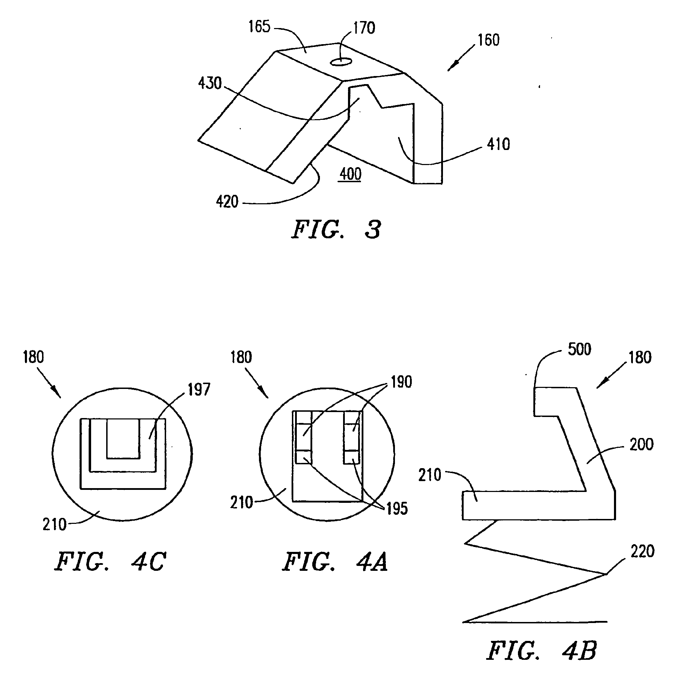

Referring now to FIGURE 3, an isometric view of the pin-lock housing 160 is shown. The pin-lock housing 160 defines a cavity 400 adapted to receive the pin lock 180 (FIG. 1) therein. In this embodiment, a first wall 410 of the pin-lock housing 160 is substantially perpendicular to the internal surface 80 (FIG. 1) of the second housing portion 60 (FIG. 1), while a second wall 420 of the pin-lock housing forms an acute angle with respect to the internal surface 80. It is contemplated that the second wall 420 may be parallel to the first wall 410, depending on the requirements of the user. A tapered portion 430 may be provided on the pin-lock housing 160 to facilitate engagement with the pin 90 (FIG. 1).

Referring now to FIGURES 4A and 4B, the pin lock 180 is shown in a top plan view and a side view, respectively. The pin lock 180 includes the pin-engaging mechanism 190 and the metallic base portion 210. A resilient member 220, in this case a spring, is shown coupled to the metallic base portion 210. While any number of materials may be used for the base portion 210, the materials must be capable of being acted upon by a magnet. Best seen in FIGURE 4B, substantially vertically disposed legs 200 may be provided as the pin-engaging mechanism 190. The legs 200 may terminate in a coupling portion 500 adapted to mate with the locking portion 150 of the pin 90 (FIG. 1). The legs 200 thereby couple the pin 90 thereto upon engagement with the locking portion 150. It can be appreciated that although the pin-engaging mechanism 190 may comprise multiple flanges 195 and is shown as two components, a single component 197 as shown in FIGURE 4C may be used with at least equal efficiency.

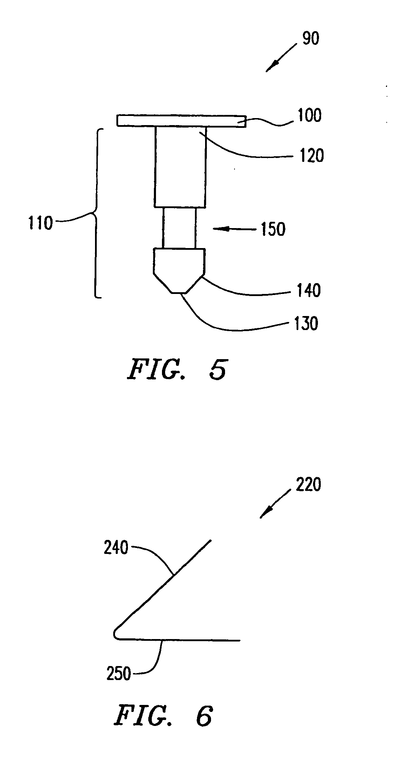

Referring now to FIGURE 5, an enlarged side plan view of the pin 90 according to one embodiment of the present invention is shown. The locking portion 150 is seen as a reduction in diameter of the shank 110, and is proximally located near the second end 130 of the pin 90. Tapers 140 are provided at about the second end 130 to facilitate engagement with the pin-engaging mechanism 190 (FIGS 4A and 4B). The tapers 140 help bias the pin-engaging mechanism 190 away from the shank 110 until the pin-engaging mechanism 190 meets the locking portion 150, wherein the pin 90 becomes locked or coupled to the pin-engaging mechanism 190. The pin head 100 may be cylindrical, substantially cylindrical, rectangular or any other shape, depending on the requirements of the user.

Referring now to FIGURE 6, an enlarged side view of the resilient member 220 is shown as an angle having first end 240 in a first plane and second end 250, which is preferably coupled to the second housing portion 60 (FIG. 1) in a second plane. The angle of the first end 240 with respect to the second end 250 is preferably acute. The resilient member may also be metallic, such that application of a magnet on the second end 250 will move the first end 240 towards the second end 250. The resilient member 220 may be a spring, a spring-damper combination, or any other resilient structure capable of deformation to interlock with the pin 90, yet capable of releasing the pin 90 after application of a magnet thereto.

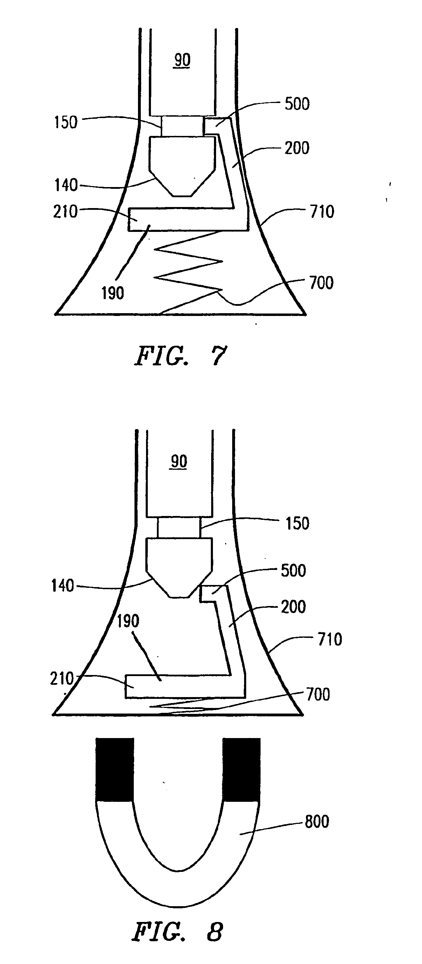

Referring now to FIGURE 7, a side plan view of the pin-engaging mechanism 190 coupled to a pin 90 and one embodiment of a resilient member 700 as located in an exemplary pin-lock housing 710 is shown. As seen in this embodiment, coupling portion 500 of pin-engaging mechanism 190 mates with locking portion 150 of pin 90 to couple the pin thereto. Resilient member 700 is seen in an extended position, but may contract as well, thus providing flexibility in the connection between the pin 90 and pin-engaging mechanism 190.

Referring now to FIGURE 8, there is shown a side plan view of the pin-engaging mechanism 190 in a separation configuration relative to the pin 90 during decoupling of the pin 90 from the pin-engaging mechanism 190. As can be seen, a magnet 800 is applied to the pin-engaging mechanism housing 710 and attracts the pin-engaging mechanism 190 in the direction of the magnetic force. The force is strong enough to separate the pin 90 from the pin-engaging mechanism 190, which allows the pin 90 to separate from the pin-engaging mechanism 190. Because the resilient member 700 may be metallic, the resilient member 700 may also be attracted by the magnetic force of the magnet 800. This feature thus allows quick coupling and decoupling of external components described above.

The previous description is of a preferred embodiment for implementing the invention, and the scope of the invention should not necessarily be limited by this description. The scope of the present invention is instead defined by the following claims.

## Claims

1. Mobile phone housing (10, 300) comprising a first housing member (20), a second housing member (60), and a fastening mechanism, said fastening mechanism comprising a pin (90) having a head (100) connectable to said first housing member (20) and a shank (110) connected at a first end (120) to said head (100), which shank (110) has a locking portion (150) at a second end (130), said fastening mechanism further comprising a pin lock (180) connected to said second housing member (60), devised to engage said locking portion (150), **characterized in that** said pin lock (180) comprises a magnetically attractable element, and is connected to the second housing member (60) by means of a resilient member (220), which resilient member (220) is devised to tilt said pin lock (180) to disengage from said locking portion (150) upon influence from a magnet (800) applied externally to said second housing member (60).

2. The mobile phone housing (10, 300) as recited in claim 1, wherein said pin lock (180) comprises a pin-engaging mechanism (190) devised to engage said locking portion (150), and a base (210) connected to the pin-engaging mechanism (190).

3. The mobile phone housing (10, 300) as recited in claim 2, wherein said pin-engaging mechanism (190) comprises a coupling portion (500) devised to engage sideways with said locking portion (150) from one side of said shank (110).

4. The mobile phone housing (10, 300) as recited in claim 3, wherein said pin-engaging mechanism (190) comprises a plurality of legs (200), said legs (200) terminating at said coupling portion (500).

5. The mobile phone housing (10, 300) as recited in claim 2, wherein said resilient member (220) is a spring supporting said base (210) at an acute angle to said second housing member (60).

6. The mobile phone housing (10, 300) as recited in any of claims 2-5, wherein said base (210) is metallic.

7. The mobile phone housing (10, 300) as recited in any of the preceding claims, wherein said resilient member (220) is metallic.

8. The mobile phone housing (10, 300) as recited in any of the preceding claims, wherein said shank (110) is tapered (140) at said second end (130).

9. The mobile phone housing (10, 300) as recited in claim 8, wherein said pin (90) is devised to latch into engagement with said pin lock (180), by means of said tapered (140) end (130) tilting said pin lock (180) about said resilient member (220), which pin lock (180) is devised to snap into engagement with said locking portion (150).

10. The mobile phone housing (10, 300) as recited in any of the preceding claims, wherein a retainer (160) connected to said second housing member (60) is devised to house said pin lock (180) and said resilient member (220).

## Patentansprüche

1. Mobiltelefongehäuse (10, 300) mit einem ersten Gehäuseelement (20), einem zweiten Gehäuseelement (60) und einem Befestigungsmechanismus, welcher einen Stift (90) mit einem mit dem ersten Gehäuseelement (20) verbindbaren Kopf (100) sowie einen an einem ersten Ende (120) mit dem Kopf (100) verbundenen Schaft (110) mit einem Verriegelungsabschnitt (150) an einem zweiten Ende (130) aufweist, wobei der Befestigungsmechanismus weiterhin eine mit dem zweiten Gehäuseelement (60) verbundene Stiftverriegelung (180) aufweist, welche den Verriegelungsabschnitt (150) aufnimmt, **dadurch gekennzeichnet, dass** die Stiftverriegelung (180) ein durch Magnetkraft anziehbares Element enthält und mit dem zweiten Gehäuseelement (60) mittels eines federnden Elements (220) verbunden ist, welches die Stiftverriegelung (180) zur Entriegelung aus dem Verriegelungsabschnitt (150) unter Einwirkung eines außen am zweiten Gehäuseelement (60) angesetzten Magneten (800) schräg stellt.

2. Mobiltelefongehäuse (10, 300) nach Anspruch 1, wobei die Stiftverriegelung (180) einen Stiftaufnahmemechanismus (190), welcher den Verriegelungsabschnitt (150) aufnimmt, sowie einen mit dem Stiftaufnahmemechanismus (190) verbundenen Sockel (210) aufweist.

3. Mobiltelefongehäuse (10, 300) nach Anspruch 2, wobei der Stiftaufnahmemechanismus (190) einen Kupplungsabschnitt (500) aufweist, welcher sich seitlich in den Verriegelungsabschnitt (150) von einer Seite des Schafts (110) einklinkt.

4. Mobiltelefongehäuse (10, 300) nach Anspruch 3, wobei der Stiftaufnahmemechanismus (190) mehrere Schenkel (200) aufweist, die am Kupplungsabschnitt (500) enden.

5. Mobiltelefongehäuse (10, 300) nach Anspruch 2, wobei das federnde Element (220) eine Feder ist, welche den Sockel (210) in spitzem Winkel zum zweiten Gehäuseelement (60) abstützt.

6. Mobiltelefongehäuse (10, 300) nach einem der Ansprüche 2 bis 5, wobei der Sockel (210) metallisch ist.

7. Mobiltelefongehäuse (10, 300) nach einem der vorstehenden Ansprüche, wobei das federnde Element (220) metallisch ist.

8. Mobiltelefongehäuse (10, 300) nach einem der vorstehenden Ansprüche, wobei der Schaft (110) am zweiten Ende (130) konisch zuläuft (140).

9. Mobiltelefongehäuse (10, 300) nach Anspruch 8, wobei der Stift (90) in die Stiftverriegelung (180) mittels des konisch zulaufenden (140) Endes (130) einrastet, welches die Stiftverriegelung (180) über dem federnden Element (220) schräg stellt, damit die Stiftverriegelung (180) in den Verriegelungsabschnitt (150) einschnappen kann.

10. Mobiltelefongehäuse (10, 300) nach einem der vorstehenden Ansprüche, wobei ein Halter (160) mit dem zweiten Gehäuseelement (60) verbunden ist, welcher die Stiftverriegelung (180) und das federnde Element (220) enthält.

## Revendications

1. Boîtier de téléphone mobile (10, 300) comprenant un premier élément de boîtier (20), un second élément de boîtier (60) et un mécanisme de fixation, ledit mécanisme de fixation comprenant une broche (90) possédant une tête (100) pouvant être connectée audit premier élément de boîtier (20) et une tige (110) connectée par une première extrémité (120) à ladite tête (100), ladite tige (110) possédant une partie de verrouillage (150) à une seconde extrémité (130), ledit mécanisme de fixation comprenant en outre un verrou de broche (180) connecté audit second élément de boîtier (60) et conçu pour s'engager sur ladite partie de verrouillage (150), **caractérisé en ce que** ledit verrou de broche (180) comprend un élément pouvant être attiré magnétiquement et est connecté au second élément de boîtier (60) à l'aide d'un élément élastique (220), lequel élément élastique (220) est conçu pour faire pivoter ledit verrou de broche (180) afin qu'il se dégage de ladite partie de verrouillage (150) sous l'influence d'un aimant (800) appliqué extérieurement audit second élément de boîtier (60).

2. Boîtier de téléphone mobile (10, 300) selon la revendication 1, dans lequel ledit verrou de broche (180) comprend un mécanisme d'engagement de broche (190), conçu pour s'engager avec ladite partie de verrouillage (150), et une base (210) connectée au mécanisme d'engagement de broche (190).

3. Boîtier de téléphone mobile (10, 300) selon la revendication 2, dans lequel ledit mécanisme d'engagement de broche (190) comprend une partie de couplage (500) conçue pour s'engager latéralement avec ladite partie de verrouillage (150), sur un côté de ladite tige (110).

4. Boîtier de téléphone mobile (10, 300) selon la revendication 3, dans lequel ledit mécanisme d'engagement de broche (190) comprend une pluralité de pattes (200), lesdites pattes (200) se terminant sur ladite partie de couplage (500).

5. Boîtier de téléphone mobile (10, 300) selon la revendication 2, dans lequel ledit élément élastique (220) est un ressort supportant ladite base (210) selon un angle aigu par rapport audit second élément de boîtier (60).

6. Boîtier de téléphone mobile (10, 300) selon l'une quelconque des revendications 2 à 5, dans lequel ladite base (210) est métallique.

7. Boîtier de téléphone mobile (10, 300) selon l'une quelconque des revendications précédentes, dans lequel ledit élément élastique (220) est métallique.

8. Boîtier de téléphone mobile (10, 300) selon l'une quelconque des revendications précédentes, dans lequel ladite tige (110) est conique (140) à ladite seconde extrémité (130).

9. Boîtier de téléphone mobile (10, 300) selon la revendication 8, dans lequel ladite broche (90) est conçue pour se verrouiller en étant engagée avec ledit verrou de broche (180), du fait que ladite extrémité (130) conique (140) bascule ledit verrou de broche (180) autour dudit élément élastique (220), ledit verrou de broche (180) étant conçu pour s'engager en s'encliquetant avec ladite partie de verrouillage (150).

10. Boîtier de téléphone mobile (10, 300) selon l'une quelconque des revendications précédentes, dans lequel un dispositif de retenue (160) connecté audit second élément de boîtier (60) est conçu pour abriter ledit verrou de broche (180) et ledit élément élastique (220).
